# EUROPEAN PATENT APPLICATION

(11) **EP 3 509 020 A1**
(43) Date of publication of application: **10.07.2019**
(21) Application number: 19150526.2
(22) Date of filing: 07.01.2019
(51) Int. Cl.: G06Q 10/04, G06Q 50/26, G06Q 50/30, G08G 1/0968, G08G 1/00, G06Q 10/06

(54) **MASS EVACUATION UTILIZING A FLEET OF AUTONOMOUS VEHICLES**

(30) Priority: 09.01.2018 US 201862615132 P
(71) Applicant: Robert Bosch GmbH, 70442 Stuttgart (DE)
(72) Inventor: Smith, Ryan, Farmington, MI, 48336 (US)

(57) **Abstract**

A processor operable to coordinate a fleet of vehicles during an evacuation procedure initiated in response to an emergency condition. The fleet of vehicles may have an autonomous function, and the processor may further be operable to direct self-navigating motion of the vehicles within the fleet. The processor may further be operable to gather data from the vehicles and other external sources, and adapt the coordination of the evacuation procedure in response to the gathered data.

## Description

### TECHNICAL FIELD

This disclosure relates to vehicles having autonomous or self-driving functions. In particular, this disclosure is directed to a system for coordinating vehicles having an autonomous function during an emergency response procedure.

### BACKGROUND

Autonomous vehicles provide may provide forms of transportation that are safer, more versatile and more affordable than privately-owned vehicles. Ride sharing of self-driving automobiles may also provide reduced congestion in traffic. Overall, the need for individual and privately-owned vehicles can be greatly reduced. This is particularly true in densely-populated urban areas, where residents may not need to travel great distances frequently, or may utilize ride-sharing or public transit.

However, widespread utilization of autonomous vehicles via ride sharing may create an undersupply of vehicles capable of traveling long distances in emergency circumstances requiring evacuation, such as impending weather events or natural disasters. What is needed is a system to coordinate a fleet of autonomous vehicles to optimize an evacuation of a population from a hazardous location to safety.

### SUMMARY

One aspect of this disclosure is directed to a vehicle fleet management system comprising a fleet processor operable to coordinate a fleet of vehicles having an autonomous function, a geographic-information data source operable to provide map data, an environment-information data source operable to provide environment data, and a traffic-information data source operable to provide traffic data. In some embodiments of this aspect, the system may further comprise a source of evacuation-status data.

Another aspect of this disclosure is directed to a non-transitory computer-readable medium storing instructions for coordinating a fleet of vehicles having an autonomous function during a process for utilizing the fleet to evacuate a population of evacuees away from a hazardous location toward safety.

The above aspects of this disclosure and other aspects will be explained in greater detail below with reference to the attached drawings.

### BRIEF DESCRIPTION OF THE DRAWINGS

Fig. 1 is a diagrammatic view of a system for coordinating a fleet of vehicles having an autonomous function during an evacuation of a population.
Fig. 2 is a diagrammatic illustration of an evacuation procedure of a population utilizing autonomous vehicles from a first zone to a second zone.
Fig. 3 is a diagrammatic illustration of an evacuation procedure of a population utilizing autonomous vehicles from a first zone to a number of second zones, with intermediary stops along the way.
Fig. 4 is a diagrammatic illustration of activity within a designated zone during an evacuation procedure utilizing autonomous vehicles.
Fig. 5 is a flowchart illustrating an example of a method of operation for a fleet processor to coordinate the actions of a fleet of vehicles having an autonomous function during an evacuation procedure.

### DETAILED DESCRIPTION

The illustrated embodiments are disclosed with reference to the drawings. However, it is to be understood that the disclosed embodiments are intended to be merely examples that may be embodied in various and alternative forms. The figures are not necessarily to scale and some features may be exaggerated or minimized to show details of particular components. The specific structural and functional details disclosed are not to be interpreted as limiting, but as a representative basis for teaching one skilled in the art how to practice the disclosed concepts.

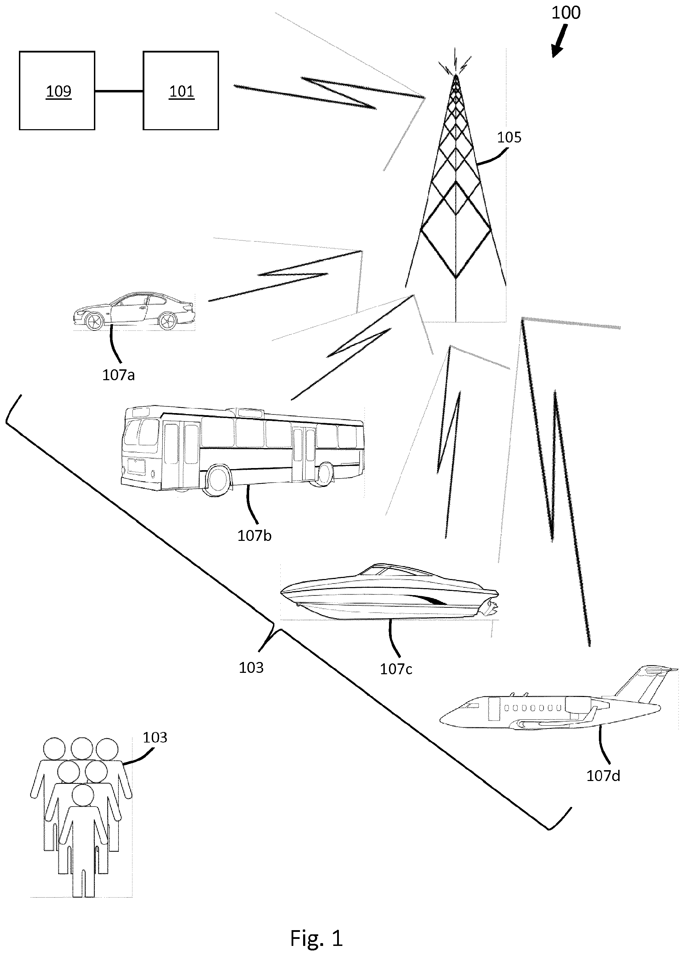

Fig. 1 depicts a diagrammatic view of a fleet management system **100**. Fleet management system **100** comprises a fleet processor **101** providing the functions of an automated mass evacuation coordination controller (AMECC). In the depicted embodiment, fleet processor **101** may be embodied as a single processor, but other embodiments may comprise other configurations such as a mainframe processor, a network server, a specialized processor device, a system of processors distributed across a network, a system of processors configured in wired or wireless communication, a laptop computer, a desktop computer, a personal digital assistant (PDA) device, a handheld processor device, a mobile processing device, a smartphone, a tablet computer, or any other alternative embodiment known to one of ordinary skill in the art.

Fleet processor **101** is in data communication with a fleet **103** of vehicles using a transceiver **105**. In the depicted embodiment, transceiver **105** comprises a single communication device operable to send and receive communications, but other embodiments may comprise distinct components for transmission and receiving communications. In the depicted embodiment, transceiver **105** is in wireless communication with fleet processor **101**, but other embodiments may comprise other configurations, such as wired communication, between fleet processor **101** and transceiver **105**.

Fleet **103** comprises a number of fleet vehicles **107**. In the depicted embodiment, fleet **103** comprises a diverse assortment of vehicles, but other embodiments may comprise a group of identical vehicles without deviating from the teachings disclosed herein. Fleet **103** may comprise a number of low-capacity ground vehicles **107a**. Low-capacity ground vehicles **107a** are characterized by an autonomous function and a passenger capacity of less than ten, and may include vehicles having an internal combustion engine, an electric motor, a hybrid prime mover, a fuel-cell prime mover, a rail-based locomotion, or any other mode of propulsion known to one of ordinary skill in the art. In the depicted embodiment, low-capacity ground vehicles **107a** are represented by a personal automobile, but other embodiments may comprise commercial vehicles (e.g., taxis, ride-share automobiles, rental cars, limousines) without deviating from the teachings herein. In the depicted embodiment, low-capacity ground vehicles **107a** are represented by a sedan, but may also comprise other configurations such as compact cars, motorcycles, vans, minivans, light trucks, sport utility vehicles, ambulances, or any other ground-based vehicle having an autonomous function and a capacity of less than ten passengers without deviating from the teachings disclosed herein.

Fleet **103** may also comprise a number of high-capacity ground vehicles **107b**. High-capacity ground vehicles **107b** are characterized by an autonomous function and a passenger capacity of ten or more, and may include vehicles having an internal combustion engine, an electric motor, a hybrid prime mover, a fuel-cell prime mover, a rail-based locomotion, or any other mode of propulsion known to one of ordinary skill in the art. In the depicted embodiment, high-capacity ground vehicles **107b** are represented by a bus, but may also comprise other configurations such as motor coaches, motorhomes, heavy trucks, light rail cars, heavy rail cars, military personnel carriers, or any other ground-based vehicle having an autonomous function and a capacity often or more passengers without deviating from the teachings disclosed herein.

Fleet **103** may also comprise a number of water vehicles **107c**. Water vehicles **107c** are characterized by an autonomous function and their capability to traverse across running or open water, and may include vehicles having an internal combustion engine, an electric motor, a hybrid prime mover, a steam-powered prime mover, a nuclear-powered prime mover, a fuel-cell prime mover, or any other mode of propulsion known to one of ordinary skill in the art. In the depicted embodiment, water vehicles **107c** are represented by a personal motorboat, but may also comprise other configurations such as cargo freighters, ferries, riverboats, low-capacity skiffs, hovercrafts, personal sport watercraft, yachts, commercial cruise ships, submarines, military vessels, amphibious vehicles, or any other aquatic vehicle having an autonomous function without deviating from the teachings disclosed herein.

Fleet **103** may also comprise a number of air vehicles **107d**. Air vehicles **107d** are characterized by an autonomous function and their capability to travel across open air, and may include vehicles having an internal combustion engine, an electric motor, a hybrid prime mover, a number of turbine engines, a propeller-based prime mover, a lighter-than-air lift component, a fuel-cell prime mover, or any other mode of propulsion known to one of ordinary skill in the art. In the depicted embodiment, air vehicles **107d** are represented by a light jet, but may also comprise other configurations such as commercial passenger jets, commercial passenger airplanes, helicopters, cargo aircraft, dirigible aircraft, drone aircraft, military transport aircraft, or any other airborne vehicle having an autonomous function without deviating from the teachings disclosed herein.

Fleet processor **101** is in operable data communication with a data source **109**. Data source **109** may be operable to provide fleet processor **101** with map data describing geographic information such as topographic features, locations of landmarks, locations of buildings, locations of emergency services, travel routes, the locations of resources, or other data useful for the coordinated collective navigation of the fleet **103**. Resources may comprise food, housing vacancies, medical supplies, fuel, medical services, lodging services, emergency response personnel, emergency response supplies, emergency response equipment, or any other finite source of goods or services useful for the evacuation. Resources may be public, private, or commercially-available.

Data source **109** may be operable to provide fleet processor **101** with environment data. The environment data may be used in conjunction with the map data to describe weather patterns, road conditions, bridge overpass clearances, waterway conditions, local laws pertaining to vehicle operation, airspace conditions, travel restrictions, or any other data useful for determining the navigability of the environment with respect to the capabilities of one or more of vehicles **107** of fleet **103**.

Data source **109** may be operable to provide fleet processor **101** with traffic data. The traffic data may be used in conjunction with the map data to describe traffic conditions of vehicles traveling within the locations defined by the map data. The vehicles described in the traffic data may comprise fleet vehicles **107**, or may comprise vehicles not included within fleet **103**. The traffic data may describe traffic conditions of roads, waterways, or airspace described in the map data.

Data source **109** may be operable to provide fleet processor **101** with evacuation-status data. The evacuation-status data may comprise an indication of whether a local authorized entity is maintaining an evacuation order. The evacuation-status data may further comprise data describing the conditions of each individual subject to an evacuation procedure. Such individuals comprise a population of evacuees **111**. The evacuation-status data may comprise the total number of the population of evacuees **111**, the location of each of the evacuees **111** with respect to the map data, a health status of each of the evacuees **111**, special transport requirements for each of the evacuees **111**, the total number of evacuees **111** remaining in a hazardous location requiring evacuation, the number of evacuees **111** who have successfully been evacuated to a designated safety location, the number of evacuees **111** who are at an intermediary location between a hazardous location and a designated safety location, the number of evacuees **111** who are en route between locations, or any other data useful for describing the status of the evacuation procedure or the evacuees subject to the evacuation procedure.

In the depicted embodiment, data source **109** provides each of the map data, environment data, traffic data, and evacuation-status data to fleet processor **101**, but other embodiments may comprise other configurations. In some embodiments, data source **109** may be comprised of a plurality of data sources collectively providing some or all of the map data, environment data, traffic data, and evacuation-status data to fleet processor **101**.

Fleet processor **101** may additionally acquire data from sources other than data source **109**. In the depicted embodiment, the vehicles **107** of fleet **103** may comprise sensors operable to generate map data, environment data, or traffic data, and provide fleet processor **101** with this additional data. For example, low-capacity ground vehicles **107a** may utilize vehicle-to-vehicle (V2V), or vehicle-to-environment (V2X) connectivity to determine traffic conditions on the roads upon which low-capacity ground vehicles **107a** traverse. Similarly, traffic conditions may be measured by proximity or motion sensors of the vehicles **107** in fleet **103**. In another example, vehicles **107** may utilize connectivity or sensors to detect anomalous environmental conditions during travel, such as a flooded road or a drawbridge in an impassable state, and transmit data describing the anomalous environmental conditions to fleet processor **101**.

In the depicted embodiment, evacuation-status data may be provided by the evacuees **111** directly to the fleet processor **101**. Evacuees **111** may register for evacuation services to be included in an evacuation procedure in order to be monitored by fleet processor **101**. In the depicted embodiment, evacuees **111** utilize a smart phone having location-tracking functions to transmit the location and status of each of the evacuees to fleet processor **101**, but other embodiments may comprise other configurations such as a portable processor, a cellular phone, a tracking beacon, an RFID, or any other mobile tracking device known to one of ordinary skill in the art without deviating from the teachings disclosed herein. In some embodiments, each of evacuees **111** is monitored using a series of registration points used to permit evacuees to input their current location and status for coordination by fleet processor **101**. Such registration points may comprise mobile computers, self-service kiosks, human-operated electronic registers, or any other equivalent alternative known to one of ordinary skill in the art without deviating from the teachings disclosed herein.

In some embodiments, fleet processor **101** may be further operable to coordinate vehicles of fleet **103** into squadrons comprising a plurality of vehicles, but not all of the vehicles in the fleet. In some embodiments, squadrons may comprise a single-type of vehicles **107**, but other embodiments may comprise squadrons having a mixture of vehicles **107**. Squadrons may be advantageous in providing a number of vehicles responding to the same directives that perform their tasks as a group. This permits a group of vehicles **107** to address situations that each individual vehicle within the squadron may not be able to address. In one example, a group of 10 evacuees **111** may comprise a family group. The evacuation-status data associated with each of the evacuees **111** within the family group may indicate that the family group may not be separated during the evacuation. If fleet **103** has an abundance of low-capacity vehicles **107a** with a capacity of 5 passengers, fleet processor **101** may coordinate a squadron of two low-capacity vehicles **107a** to address the family group. Using a squadron of vehicles effectively transports the family group without risking their separation by the otherwise-optimal coordination of independent vehicles **107** within fleet **103**.

In the depicted embodiment, vehicle-operation data may be provided to fleet processor **101** from each of vehicles **107**. Vehicle-operation data describes the operable condition of each of vehicles **107** in fleet **103**, including maintenance requirements, poorly-performing conditions, malfunctions, or breakdowns. Fleet processor **101** may be configured to only utilizes vehicles **107** of fleet **103** that are sufficiently operable, or may direct vehicles **107** to acquire routine upkeep in order to optimize the evacuation process. For example, a first vehicle **107** may be directed to a re-fueling location defined within the map data when the first vehicle **107** reports a low-fuel condition to fleet processor **101**. Because such a routine condition is simple to rectify, it may be optimal to rectify the situation and maintain an additional vehicle **107** in fleet **103** to optimize an evacuation.

These examples are intended to provide illustration, and not limitation, to the teachings disclosed herein. Other embodiments may comprise other data sources providing the disclosed data, or additional data, without deviating from the teachings disclosed herein.

Fleet processor **101** may use the received data to optimize the coordinated evacuation of evacuees **111** using vehicles **107**, based upon the conditions described by the data and a set of priority factors defining the optimal evacuation. For example, evacuees requiring urgent medical attention may be addressed sooner than healthy evacuees, or larger-capacity vehicles **107** of fleet **103** may be deployed to areas with a higher concentration of evacuees.

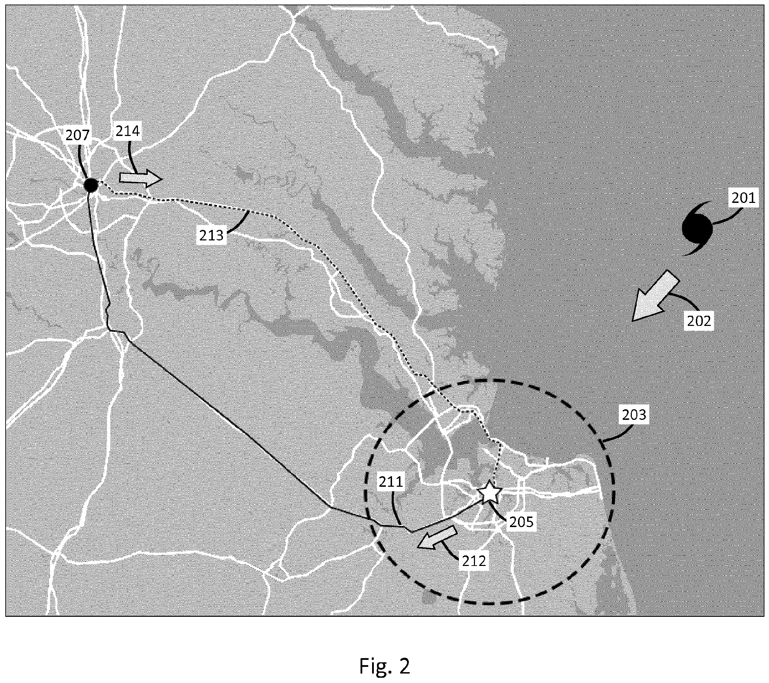

Fig. 2 provides a diagrammatic illustration of an evacuation procedure. In the depicted embodiment, a hurricane **201** is traveling in direction **202** toward land, and is expected to make landfall within a hazardous zone **203**. In the depicted embodiment, hazardous zone **203** is defined by a circular radius, but other embodiments may comprise other configurations of hazardous zone **203**. Within hazardous zone **203** is a city Alpha **205**, and thus city Alpha **205** is reasonably expected to be impacted by hurricane **201**. In the depicted embodiment, city Alpha **205** is declared to be in a state of emergency evacuation, and a vehicle fleet may be deployed according to embodiments of the teachings herein. In the depicted embodiment, the vehicle fleet (not shown) comprises low-capacity ground vehicles **107a** (see Fig. 1) and high-capacity ground vehicles **107b** (see Fig. 1), but other embodiments may comprise other configurations of vehicle fleets. In the depicted embodiment, the fleet comprises vehicles that normally operate within city Alpha **205**, but some embodiments may comprise fleets that are coordinated across zones in more than one municipality, including vehicles normally operating in municipalities not otherwise involved in the evacuation.

The ground vehicles of the vehicle fleet board evacuees in city Alpha **205** and are deployed to another city designated as a safety zone. In the depicted environment, city Bravo **207** is designated as a safety zone. Upon reaching city Bravo **207**, the vehicles de-board evacuees, and may return to city Alpha **205** if more evacuees remain within hazardous zone **203**. In the depicted embodiment, boarded vehicles carrying evacuees toward city Bravo **207** travel along an evacuation route **211** in a direction **212** and de-boarded vehicles returning toward city Alpha **205** travel along a return route **213** in a direction **214**, but other embodiments may comprise other configurations. In some embodiments, the de-boarded vehicles deployed along return route **213** may be loaded with supplies, relief workers, emergency personnel, or other portable resources before returning to city Alpha **205**.

In the depicted embodiment, evacuation route **211** and return route **213** are selected based upon an optimally-calculated evacuation according to a set of priority factors. Priority factors may include the speed of removal of evacuees from the hazardous zone **203**, the traffic speeds of a navigable route for vehicles within the fleet, hazardous conditions along a navigable route, operational capabilities of individual vehicles within the fleet, or any other factors one of ordinary skill in the art would recognize as being pertinent to an evacuation.

For example, an optimal evacuation route may be determined based upon the least amount of travel time between the hazardous zone and a designated safety zone. However, if the normally-optimal evacuation route experiences abnormally slow-moving traffic, then an alternative route may instead minimize travel time, and vehicles may instead be deployed along the alternative route. In the depicted embodiment, vehicles may be re-deployed in response to changing conditions, providing real-time optimization of the evacuation.

In the depicted embodiment, each of evacuation route **211** and return route **213** may comprise smart roads that are operable to adjust traffic conditions and traffic control devices in order to prioritize traffic pertaining to an evacuation. For example, the smart roads may be operable to adjust the timing of traffic signals to favor the flow of traffic used in evacuation. In another example, the smart roads may adjust signage and markings to favor the flow of traffic used in evacuation. In yet another example, the smart roads may comprise configurable access gates or barriers that may be utilized to prevent use of the roads in a direction moving against the flow of traffic used by vehicles performing the evacuation. In the depicted embodiment, the smart roads may be operable to monitor traffic conditions, environmental conditions, or other data that may be useful in determining an appropriate route from a hazardous zone to a designated destination. These embodiments are provided by way of example and not limitation, and other embodiments may comprise other functions of smart roads without deviating from the teachings disclosed herein.

In the depicted embodiment, evacuation route **211** represents a single route, but other embodiments may comprise a plurality of evacuation routes **211**. In some embodiments, different forms of vehicles may be deployed along different routes that are best-suited for deployment. For example, the most-direct route between a hazardous zone and a designated safety zone may include a number of low-clearance bridges, and thus especially tall vehicles in a fleet may be deployed along an alternative route. In the depicted embodiment, the vehicles of the fleet may be deployed along an alternative route in response to abnormal, anomalous, or slow-moving conditions reported by the smart roads. In some embodiments, vehicles may be deployed along an alternate route in response to data indicating slow-moving traffic along the normally-optimal route. In some embodiments, vehicles may be deployed along an alternate route in response to data indicating that the normally-optimal route is experiencing hazardous conditions (e.g., flooding of a portion of the normally-optimal route). In some embodiments, some vehicles may utilize the normally-optimal route, but other vehicles may be deployed along an alternate route if they are incapable of traversing the conditions reported by the smart roads (e.g., steep grade of some roadways, low-clearance overpasses). These embodiments are provided by way of example and not limitation, and other embodiments may comprise other utilizations of smart road data to adaptively deploy vehicles during an evacuation.

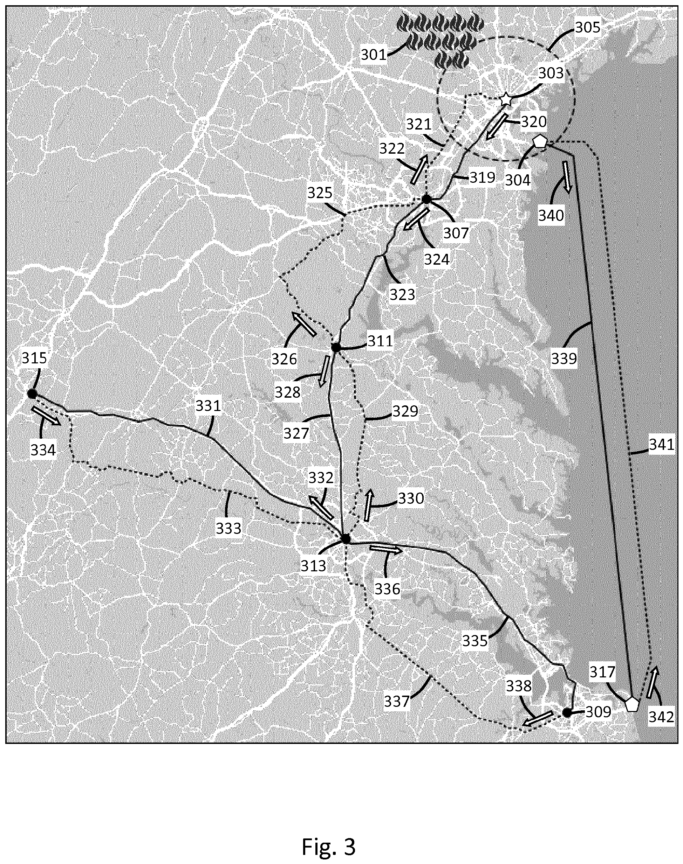

In some embodiments, an optimal evacuation may be achieved using intermediary zones between the hazardous zone and a designated safety zone. Such evacuations may be advantageous in situations involving relatively small fleets, relatively lengthy travel, or relatively sparse lodging for evacuees. Utilization of intermediary zones during evacuation may advantageously relocate evacuees away from a hazardous zone more quickly, and thus relieve a larger population of immediate danger more quickly than evacuations that do not utilize intermediary zones. Fig 3 is a diagrammatic illustration of an evacuation procedure utilizing staged intermediary zones designated by a fleet processor (see Fig. 1).

In the depicted embodiment, a wildfire **301** is within proximity of a city Charlie **303** and a port Charlie **304**. In response, a hazardous zone **305** is declared in a radius around city Charlie **303**. The nearest large population center to city Charlie **303** located further away from wildfire **301** is a city Delta **307**. In the depicted embodiment, a large population must be evacuated from city Charlie **303** such that not all of the evacuees may be safely housed in city Delta **307**. The next-nearest large municipality is a city Echo **309**, located very far away from city Charlie **303**. Therefore, the evacuation may also utilize resources and fleet vehicles normally located in smaller nearby municipalities within the region, with a number of the smaller nearby municipalities being designated as intermediary zones during the evacuation. In the depicted embodiment, the smaller nearby municipalities may include town Foxtrot **311**, town Juliet **313**, or town Kilo **315**. In the depicted embodiment, town Foxtrot **311** and town Juliet **313** are en route to city Echo **309** when traveling by major roads away from town Charlie **303**. In the depicted embodiment, city Echo **309** further comprises a port Echo **317**.

Fig. 3 illustrates a staged evacuation utilizing iterations of the process illustrated by Fig. 2. Evacuees board fleet vehicles within city Charlie **303**, and the vehicles are then deployed along an optimal route toward city Delta **307** along a first evacuation route **319** in a first evacuation direction **320**. The fleet vehicles boarded within city Charlie **303** may originate from zones within city Charlie **303**, or may be directed toward city Charlie **303** from elsewhere. When the boarded fleet vehicles arrive in city Delta **307**, evacuees are de-boarded. If the coordinating fleet processor of the de-boarded vehicles determines that a number of evacuees remain in city Charlie **303**, the de-boarded vehicles may be deployed along a first return route **321** in a first return direction **322** back toward city Charlie **303**. The de-boarded vehicles may be loaded with emergency relief workers, supplies, or other portable resources before returning to city Charlie **303**. If the coordinating fleet processor determines that no evacuees remain in city Charlie **303**, or if the current number of vehicles deployed in or deployed to city Charlie **303** is sufficient to address the remaining number of evacuees, the de-boarded vehicles may not be deployed along first return route **322**.

City Delta **307** may be utilized as a designated safety zone for evacuees. If it is determined by a coordinating fleet processor (see Fig. 1) that the resources available within city Delta **307** (e.g., housing vacancies, medical supplies, fuel, etc.) are insufficient to accommodate the total number of evacuees, city Delta **307** may be designated as an intermediary zone for transporting evacuees from city Charlie **303** to a designated safety zone. In some embodiments, zones may be simultaneously designated as a safety zone and an intermediary zone. In some embodiments, designated safety zones for each evacuee may be designated at the start of evacuation. In some embodiments, designated safety zones for each evacuee may be designated in response to real-time data collection reporting conditions of resources pertaining to evacuation (housing vacancies, food, medical supplies, etc.) in zones. Real-time data collection may advantageously permit a fleet processor to adapt the coordination of an evacuation in response to changing conditions in the environment.

When city Delta **307** is designated as an intermediary zone, evacuees may be transferred to other vehicles coordinated by the fleet processor for transportation to a designated safety zone or another designated intermediary zone that is en route to a designated safety zone. In the depicted embodiment, vehicles boarded in city Delta **307** may be deployed toward town Foxtrot **311** on a second evacuation route **323** in a second evacuation direction **324**. Upon arrival in town Foxtrot **311**, the boarded vehicles may de-board the evacuees. If the coordinating fleet processor of the de-boarded vehicles determines that a number of evacuees remain in town Foxtrot **311**, the de-boarded vehicles may be deployed along a second return route **325** in a second return direction **326** back toward city Delta **307**. The de-boarded vehicles may be loaded with emergency relief workers, supplies, or other resources before returning to city Delta **307**. If the coordinating fleet processor determines that no evacuees remain in city Delta **307** and require additional transportation, or if the current number of vehicles deployed in or deployed to city Delta **307** is sufficient to address the remaining number of evacuees requiring additional transportation, the de-boarded vehicles may not be deployed along second return route **326**.

Town Foxtrot **311** may be designated as a safety zone, an intermediary zone, or both a safety zone and an intermediary zone. If town Foxtrot **311** is designated as an intermediary zone, the transfer process described above may be iteratively repeated until all evacuees are accommodated. Vehicles may be boarded by evacuees within town Foxtrot **311**, and the boarded vehicles may be deployed along a third evacuation route **327** in a third evacuation direction **328** toward town Juliet **313** for de-boarding. De-boarded vehicles may be re-deployed back to town Foxtrot **311** along a third return route **329** along a third return direction **330**.

Town Juliet **313** may be designated as a safety zone, an intermediary zone, or both a safety zone and an intermediary zone. If town Juliet **313** is designated as an intermediary zone, the transfer process described above may again be iteratively repeated until all evacuees are accommodated. Vehicles may be boarded by evacuees within town Juliet **313**, and the boarded vehicles may be deployed along an evacuation route toward another zone. In the depicted embodiment, town Juliet **313** originates two potential evacuation routes. A fourth evacuation route **331** may be used to deploy boarded vehicles in a fourth evacuation direction **332** toward town Kilo **315**. After de-boarding evacuees, the vehicles may be re-deployed along a fourth return route **333** in a fourth return direction **334**. Alternatively, the boarded vehicles may be deployed toward city Echo **309** using a fifth evacuation route **335** in a fifth evacuation direction **336**. After de-boarding, the vehicles may be re-deployed along a fifth return route **337** in a fifth return direction **338**.

In the depicted embodiment, town Kilo **315** may be assigned to accommodate a number of evacuees that is sufficiently small that the normal traffic conditions would not interfere with optimal evacuation. In some embodiments, fourth evacuation route **331** and fourth return route **333** may comprise the same road operating under normal traffic conditions. Some embodiments may have alternative configurations. This depicted embodiment is given by way of example and not limitation, and one of ordinary skill in the art will recognize that the teachings disclosed herein may be applied to arbitrary municipalities based upon the data analysis of a fleet processor.

In some embodiments, some evacuees may be transported out of a hazardous zone using a water vehicle (see Fig. 1), rather than a ground vehicle. In the depicted embodiment, some evacuees may be transported away from hazardous zone **305** by boarding a water vehicle in port Charlie **304**. The water vehicle may then travel along a sixth evacuation route **339** in a sixth evacuation direction **340**. The sixth evacuation route **339** traverses water to bring evacuees from port Charlie **304** to port Echo **317**. If evacuees remain in port Charlie **304**, the water vehicle may be re-deployed along a sixth return route **341** in a sixth return direction **342**. The sixth return route **341** traverses water to return water vehicles to port Charlie **304**.

Evacuation routes and return routes may be selected based upon an optimization of evacuation by a fleet processor in accordance with a set of priority factors defining the optimization. Priority factors may include the capabilities of vehicles in the coordinated fleet, the number of vehicles, the number of evacuees, the danger posed to each individual evacuee, shelter availability in designated safety zones, resource availability in designated safety zones, traffic conditions, environment conditions, or any other criteria known to one of ordinary skill in the art to be useful in optimizing an evacuation. For example, in some embodiments evacuation routes and return routes utilized by air vehicles will be different than routes utilized by ground vehicles. In some embodiments, evacuation may be inappropriate for reasons of safety, such as use of water vehicles to evacuate in response to a hurricane, or ground vehicles to evacuate in response to a flood.

In some embodiments, fleets comprised of a mixture of vehicle types may transfer evacuees from one vehicle type to another vehicle type en route to a designated safety zone. For example, in some embodiments evacuees may board a ground vehicle to be transported to an intermediary zone where they de-board the ground vehicle and board an air vehicle to be transported to a designated safety zone. These embodiments are provided by way of example and not limitation, and other embodiments may comprise other configurations without deviating from the teachings disclosed herein.

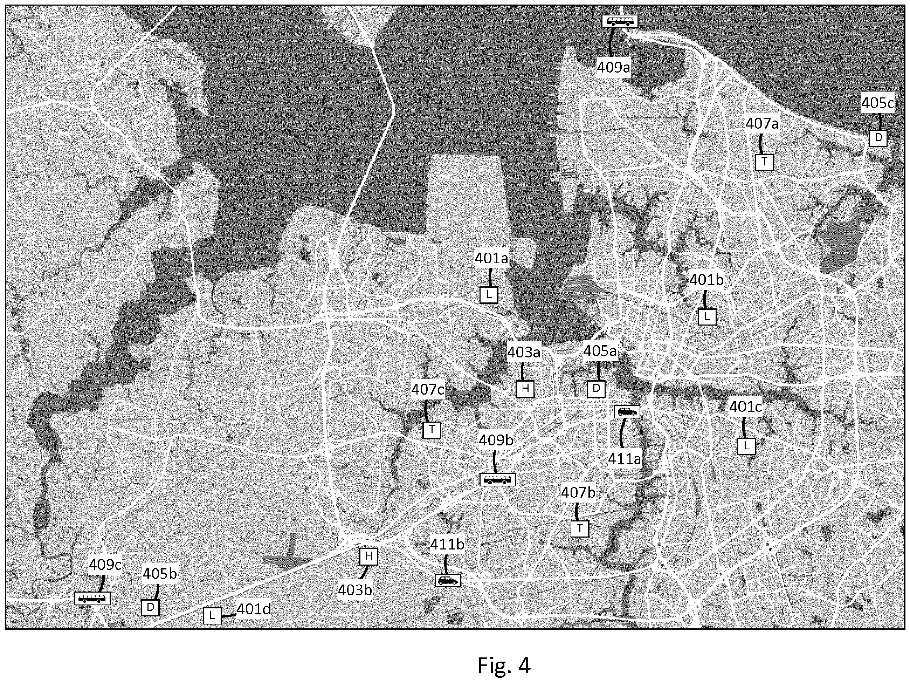

Fig. 4 is a diagrammatic illustration of activity within a designated safety zone according to one example embodiment of the teachings disclosed herein. The designated safety zone comprises a municipality during an evacuation procedure according to one embodiment of the teachings disclosed herein. The municipality may comprise a number of permanent facilities. In the depicted embodiment, the permanent facilities may include lodging sites **401** and hospitals **403**. Lodging sites **401** may comprise commercial, municipal, or private facilities normally providing shelter or provisions, such as hotels, motels, bed-and-breakfasts, hostels, markets, restaurants, boardinghouses, public housing, dormitories, campgrounds, eateries, shopping centers, pharmacies, or any other alternative provider of shelter or provisions in non-emergency settings known to one of ordinary skill in the art. Hospitals **403** may also include medical treatment centers, outpatient facilities, nursing homes, or any other alternative facility equipped to provide medical care known to one of ordinary skill in the art.

The municipality may further comprise designated locations established in response to the emergency evacuation. In the depicted embodiment, the designated facility may include evacuation depots **405** and temporary shelters **407**. Evacuation depots **405** may comprise bus depots, bus stops, airports, seaports, parking structures, parking lots, or any other location suitable for a vehicle to be boarded or de-boarded by passengers or to be loaded or unloaded with cargo. For example, in the depicted embodiment, evacuation depot **405a** comprises a bus depot, evacuation depot **405b** comprises an airport, and evacuation depot **405c** comprises a seaport. Temporary shelters **407** may comprise community centers, convention centers, shopping malls, stadiums, houses of worship, schools, or any other location able to provide shelter to evacuees but not normally designated for such purposes. In some embodiments, locations may be considered both a permanent facility and also a designated facility. For example, a dormitory having a large parking lot may serve as a lodging site to house evacuees and an evacuation depot to transfer evacuees and cargo between vehicles. Other embodiments may comprise other forms of facilities or locations useful to the evacuation process.

The embodiment depicted in Fig. 4, the fleet comprises a number of long-distance vehicles **409** and a number of short-distance vehicles **411**. Long-distance vehicles **409** may be directed by the fleet processor to transport evacuees or cargo between zones, and short-distance vehicles **411** may be directed by the fleet processor to transport evacuees or cargo within a single zone. In the depicted embodiment, long-distance vehicles **409** are depicted as high-capacity ground vehicles (see Fig. 1) and short-distance vehicles **411** are depicted as low-capacity ground vehicles (see Fig. 1), but other embodiments may comprise other configurations without deviating from the teachings disclosed herein. In some embodiments, some or all vehicles may perform the functions of both the long-distance vehicles **409** and short-distance vehicles **411** disclosed herein.

In the depicted embodiment, long-distance vehicle **409a** comprises a boarded vehicle arriving into the zone carrying evacuees from a former location (not shown) nearer to a hazardous zone. Long-distance vehicle **409a** may be directed to evacuation depot **405a** for de-boarding of evacuees. Long-distance vehicle **409b** comprises a de-boarded vehicle directed by its coordinating fleet processor to evacuation depot **405b** to be loaded with supplies and emergency relief workers before returning to the former location. Long-distance vehicle **409c** comprises a vehicle properly loaded with supplies and emergency relief workers directed to return to the former location.

If the depicted zone is designated as an intermediary zone, evacuees de-boarded at evacuation depot **405a** may board another long-distance vehicle **409**, which the fleet processor may direct to another intermediary zone, or a designated safety zone elsewhere. In the depicted embodiment, the depicted zone is a designated safety zone, and short-distance vehicles **411** are directed by the fleet processor to transport evacuees from an evacuation depot to a final destination comprising a permanent facility or a designated location. Each of the final destinations is operable to report conditions data to the fleet processor such as total vacancy, available resources, amenities, cost of lodging, cost of food, or other data useful in determining an optimal final destination for evacuees. Each evacuee's final destination is optimally-determined based upon conditions data provided to the fleet processor, and evacuation-status data pertaining to the individual evacuee.

For example, a family of five may update their evacuation-status data that they do not wish to be separated during the evacuation, and also that they are willing to pay hotel fees to receive more luxurious accommodations. In the depicted embodiment, lodging site **401a** lodging site **401b** may each comprise a hotel offering rooms for a suitable fee. If lodging site **401a** lacks sufficient vacancy to accommodate all five members of the family, the fleet processor may direct a short-distance vehicle **411a** to lodging site **401b**. Other evacuees who do not wish to pay additional fees for more luxurious accommodations may instead be transported to a different lodging site **401** or a temporary shelter **407**.

In another example, a number of evacuees are de-boarded from a long-distance vehicle **409** at evacuation depot **405a** having evacuation-status data indicating a need for medical attention. In the depicted embodiment, hospital **403a** comprises a trauma center and hospital **403b** comprises an urgent care facility. The fleet processor may direct a short-distance vehicle **411** to transport the seriously-injured evacuees to hospital **403a**, and direct another short-distance vehicle **411** to transport the remaining injured evacuees to hospital **403b**. In the depicted embodiment, short-distance vehicle **411b** comprises a vehicle transporting evacuees who have received treatment for minor injuries to a different final destination.

In the depicted embodiment, the roads of the depicted zone may further comprise smart roads operable to optimize the flow of traffic for the purpose of performing the evacuation. Long-distance vehicles **409** and short-distance vehicles **411** may further be operable to utilize V2X or V2V connectivity in order to successfully navigate the zone during the evacuation.

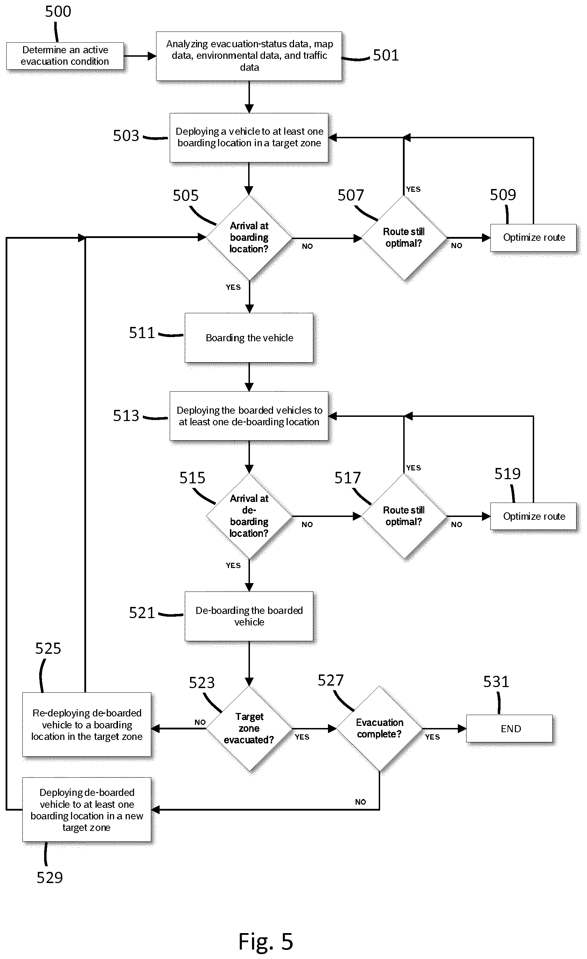

Fig. 5 depicts a flowchart illustrating a method of coordinating an evacuation by a fleet processor utilizing at least one vehicle having an autonomous function. Though depicted embodiment provides a method with respect to a single vehicle, one of ordinary skill in the art will recognize that this method may be applicable by a fleet processor to a plurality of vehicles in the fleet. In such embodiments, the fleet processor may direct a number of vehicles in the same manner or may direct each vehicle in a manner distinct and independent of the other vehicles in the fleet.

The method begins at step **500** when a fleet processor determines that an active evacuation condition has been declared. After recognizing the evacuation condition, the fleet processor proceeds to step **501** to analyze relevant data, including evacuation-status data of evacuees, evacuation-status data of resources, map data for navigation of the fleet, environmental data defining weather conditions or travel conditions that may impact navigation of vehicles, and traffic data defining traffic conditions that may impact navigation of vehicles. Step **501** may additionally comprise acquiring the data from a number of data sources prior to the analysis, such as from external data sources in communication with the fleet processor, or directly from devices to be coordinated by the fleet processor, such as individual fleet vehicles or portable electronic devices identifying and tracking individual evacuees. The analysis of step **501** may result in data defining the number of vehicles in the fleet, the operability of each vehicle in the fleet, the present location of each vehicle in the fleet, the number of evacuees, the location of each individual evacuee, any special needs or conditions for each individual evacuee, the boundaries of any designated hazardous zones, the boundaries of any designated safe zones, the quantities and locations of available resources, the number of relief workers, the skillsets of individual relief workers, the present conditions of travel routes available to the vehicles in the fleet, or any other data that may be useful in coordinating the evacuation. The analysis may further result in designated safety zones being assigned to each of the evacuees according to an optimal evacuation defined by a number of priority factors.

After the analysis is complete, the fleet processor deploys a vehicle to at least one boarding location in a target zone at step **503**. The target zone may be a hazardous zone, intermediary zone, or a designated safety zone. The target zone may be defined as comprising at least one evacuee that has not yet been fully evacuated, wherein a full evacuation may be defined by the transport of an evacuee to a designated final location within a designated safety zone assigned to that evacuee.

During deployment, the vehicle periodically updates its status, and the fleet processor periodically determines if the vehicle has arrived at the designated boarding location in step **505**. If vehicle has not yet arrived, the fleet processor proceeds to step **507** to determine if the route to the boarding location is still the optimal route. Step **507** may comprise updating the data analyzed in step **501** and re-analyzing the data to determine an optimal route if the data has changed. In some embodiments, the route may additionally be determined non-optimal if the boarding location no longer requires additional vehicles to board evacuees, or if the vehicle operating status changes such that the fleet processor no longer considers the vehicle suitably operable for deployment. If the vehicle's route is still the optimal route to the boarding location, the method returns to step **503** and directs the vehicle to continue along the optimal route toward the boarding location. If the route is no longer the most-optimal route, the fleet processor proceeds to step **509** to determine the new most-optimal route to the boarding location and communicate the newly-optimized route to the vehicle. If the boarding location no longer requires additional vehicles, the optimization may comprise assignment of a new boarding location to the vehicle. If the vehicle is no longer suitably operational, the optimization may comprise directing the vehicle to cease operation entirely or directing the vehicle to cancel the deployment to the boarding location and instead deploy the vehicle to a location for maintenance or repairs. After the vehicle has been updated with the optimized route, the method returns to step **505** and the fleet processor directs the vehicle to continue toward the boarding location.

Once it is determined that the vehicle has arrived at the boarding location in step **505**, the method proceeds to step **511**, where the fleet processor awaits indication from the vehicle that the vehicle has been boarded with an appropriate number of evacuees. The appropriate number of evacuees to be boarded at each boarding location is determined by the fleet processor based upon the evacuation data analysis of step **501**. In many instances, the appropriate number of evacuees may be the full passenger capacity of the vehicle, but other instances may not fully-board a vehicle.

For example, if the vehicle has a capacity of ten passengers, and only nine evacuees require evacuation at a boarding location, an optimal evacuation may not require the vehicle to be loaded to capacity. In another example, if the vehicle has a two remaining seats, but three remaining evacuees at the boarding location are a family group that cannot be separated, the optimal evacuation may not require the vehicle to be loaded to capacity. In some embodiments, after boarding the appropriate number of evacuees at a first boarding location, the fleet processor may determine that vehicles having remaining capacity may be deployed to other boarding locations within the same target zone. In one example, a fleet processor may direct a vehicle having a capacity of ten to board two groups of five evacuees, each group comprising a family unit, from their respective homes within a target zone. In these such embodiments, the fleet processor will not consider the boarding process of step **511** complete until the total appropriate number of evacuees have been boarded according to the optimal evacuation plan.

After the vehicle has been fully boarded, the fleet processor directs the boarded vehicle to transport the evacuees to a de-boarding location in step **513**. The de-boarding location may be within the target zone, or it may be in another zone. The de-boarding location may comprise a final location in a designated safety zone for at least some of the boarded evacuees. The fleet processor periodically determines if the vehicle has arrived at the de-boarding location at step **515**. If vehicle has not yet arrived, the fleet processor proceeds to step **517** to determine if the route to the de-boarding location is still the optimal route. Step **517** may comprise updating the data analyzed in step **501** and re-analyzing the data to determine an optimal route if the data has changed. If the vehicle's route is still the optimal route to the de-boarding location, the method returns to step **513** and directs the vehicle to continue along the optimal route toward the de-boarding location. If the route is no longer the most-optimal route, the fleet processor proceeds to step **519** to determine the new most-optimal route to the boarding location and communicate the newly-optimized route to the vehicle. After the vehicle has been updated with the optimized route, the method returns to step **513** and the fleet processor directs the vehicle to continue toward the de-boarding location.

Once it is determined that the vehicle has arrived at the de-boarding location in step **515**, the fleet processor instructs the vehicle to de-board an appropriate number of boarded evacuees at step **521**. The appropriate number of boarded evacuees to be de-boarded at each de-boarding location is determined by the fleet processor based upon the evacuation data analysis of step **501**. In many instances, the appropriate number of boarded evacuees may be the full passenger capacity of the vehicle, but other instances may not fully de-board a vehicle.

In one example, if a vehicle is carrying ten boarded evacuees, but the de-boarding location is a final destination in a designated safety zone having only six total vacancies, the fleet processor may direct the vehicle to another de-boarding location to accommodate the remaining four boarded evacuees before determining that the vehicle is fully de-boarded.

After the vehicle is properly de-boarded in step **521**, the fleet processor determines if the target zone has been fully evacuated, or if any evacuees remaining at a location in the target zone require evacuation to a different location. If the target zone has not been fully evacuated, then the fleet processor directs the vehicle to a boarding location within the target zone at step **525**, and the method proceeds to step **505** for another iteration of boarding and de-boarding. The boarding location of step **525** may be the same boarding location from which the vehicle came, or it may be a different boarding location within the target zone. In some embodiments, the fleet processor may direct the vehicle to be loaded with supplies or a number of relief workers prior to deployment to the boarding location. In some embodiments, the fleet processor may direct the vehicle to a location suitable for maintenance or repair prior if the status of the vehicle indicates that is not suitably operational. The vehicle may be re-deployed to the boarding location after completion of the maintenance or repairs. After the fleet processor assigns a boarding location to the vehicle in step **525**, the method returns to step **505** for another iteration of the boarding and de-boarding.

If the fleet processor determines that the target zone is fully evacuated at step **523**, the method proceeds to step **527**, where the fleet processor determines if the total evacuation is completed, or if any other zones comprise a number of evacuees that still require transport to another location. If the evacuation has not been completed, the fleet processor assigns the vehicle to a new target zone, and deploys the vehicle to a boarding location within that target zone at step **529**. In some embodiments, the fleet processor may direct the vehicle to be loaded with supplies or a number of relief workers prior to deployment to the boarding location. In some embodiments, the fleet processor may direct the vehicle to a location suitable for maintenance or repair prior if the status of the vehicle indicates that is not suitably operational. The vehicle may be re-deployed to the boarding location after completion of the maintenance or repairs. After the fleet processor assigns a new target zone to the vehicle in step **529**, the method returns to step **505** for another iteration of the boarding and de-boarding.

If the fleet processor at step **527** determines that the evacuation has completed, the method proceeds to step **531** and ends. In some embodiments, after the evacuation has completed at step **531**, the vehicle may be directed to a designated safety zone for storage until the active evacuation condition has ended. In some embodiments, after the evacuation has completed at step **531**, the vehicle may be returned to a non-emergency operational mode.

The fleet processor may be embodied as a processor operating based upon the contents of a non-transitory computer-readable medium having computer-executable instructions thereon. Non-transitory computer-readable storage media may be any media that can be accessed by a general purpose or special purpose computer embodied within a physical hardware form. By way of example, and not limitation, such non-transitory computer-readable storage media or machine-readable medium may comprise random-access memory (RAM), read-only memory (ROM), electrically erasable programmable read-only memory (EEPROM), optical disc storage, magnetic disk storage, linear magnetic data storage, magnetic storage devices, flash memory, or any other medium or combination of media which can be used to carry or store desired program code means in the form of computer-executable instructions that is known to one of ordinary skill in the art.

While exemplary embodiments are described above, it is not intended that these embodiments describe all possible forms of the disclosed apparatus and method. Rather, the words used in the specification are words of description rather than limitation, and it is understood that various changes may be made without departing from the spirit and scope of the disclosure as claimed. The features of various implementing embodiments may be combined to form further embodiments of the disclosed concepts.

## Claims

1. A vehicle fleet management system comprising:
a fleet processor;
a fleet comprised of a number of vehicles, each of the number of vehicles in wireless data communication with the fleet processor and having an autonomous function;
a geographic-information data source in data communication with the fleet processor, the geographic-information data source operable to provide map data to the fleet processor;
a environment-information data source in data communication with the fleet processor, the environment-information data source operable to provide environment data to the fleet processor; and
a traffic-information data source in data communication with the fleet processor, the traffic-information data source operable to provide traffic data to the fleet processor,
wherein the fleet processor is operable to utilize an autonomous mode of the number of vehicles to coordinate an evacuation procedure for at least one of the number of vehicles, the evacuation procedure comprising the control of the at least one of the number of vehicles to transport a number of evacuees along a navigable route away from a hazardous location towards a safe location, the hazardous location being defined using the map data and environment data, the safe location being defined using the map data and environment data, and the navigable route being defined by the fleet processor using the map data, environment data, and traffic data.

2. The vehicle fleet management system of claim 1, wherein the fleet comprises a mixture of vehicle types, the mixture comprising at least two types from a list comprising ground vehicles, water vehicles, and air vehicles.

3. The vehicle fleet management system of claim 2, wherein the fleet comprises a mixture of vehicle types, the mixture comprising ground vehicles, water vehicles, and air vehicles.

4. The vehicle fleet management system of claim 1, further comprising a user interface for the fleet processor operable to display at least one of the map data, environment data, or traffic data during the evacuation procedure.

5. The vehicle fleet management system of claim 1, wherein the fleet processor is further operable to dynamically adjust the navigable route in response to changes in at least one of the map data, the environment data, or the traffic data.

6. The vehicle fleet management system of claim 1, further comprising an evacuation-status data source in data communication with the fleet processor, the evacuation-status data source operable to provide evacuation-status data to the fleet processor, the evacuation-status data comprising at least one of the total number of evacuees, the number of evacuees remaining in hazardous location, the number of evacuees that may be hosted in a safe location, or location and navigation data pertaining to another of the number of vehicles controlled by the fleet processor during the evacuation procedure .

7. The vehicle fleet management system of claim 6, wherein the fleet processor is further operable to utilize the evacuation-status data in conjunction with the map data, environment data, and traffic data in order to define the navigable route of at least one of the number of vehicles controlled during the evacuation procedure.

8. The vehicle fleet management system of claim 6, wherein the evacuation-status data source comprises a number of wireless devices, each of the number of wireless devices providing evacuation-status data corresponding to a number of evacuees.

9. The vehicle fleet management system of claim 1, wherein each of the number of vehicles is operable to generate vehicle-operation data reflecting the operational condition of the vehicle, each of the number of vehicles further operable to transmit its respective vehicle-operation data to the fleet processor, wherein the fleet processor is operable to selectively utilize the number of vehicles based upon the received vehicle-operation data.

10. The vehicle fleet management system of claim 1, further comprising a number of smart-roads in data communication with the fleet processor, the number of smart-roads operable to generate and transmit map data and at least one of traffic data or environment data to the fleet processor.

11. The vehicle fleet management system of claim 10, wherein the smart-roads are further operable to adjust traffic control devices to optimize the navigable routes used by the number of vehicles during the evacuation procedure.

12. The vehicle fleet management system of claim 1, wherein the map data further comprises a listing of public or commercial sources of food, water, fuel, provisions, shelter, or medical care.

13. A method for using a fleet comprised of autonomous vehicles and a fleet processor to evacuate a population of evacuees from a number of first zones to one of a number of second zones until a completion condition is satisfied, the method comprising:
deploying a number of the autonomous vehicles to a first location within a first zone where a number of the evacuees are located, the deploying initiated by transmission of a deployment command to each of the number of the autonomous vehicles from the fleet processor;
boarding the number of evacuees onto the number of autonomous vehicles to yield a number of loaded vehicles;
selecting an optimal second zone from the number of second zones based upon a number of priority factors, a set of evacuation-status data, and at least one of a set of map data, a set of environment data, or a set of traffic data;
populating a first number of navigable routes between the first location and a second location within the optimal second zone, the navigable routes being traversable by the number of loaded vehicles;
selecting a first optimal navigable route from the first number of navigable routes based upon the number of priority factors, the set of evacuation-status data, and at least one of a set of map data, a set of environment data, or a set of traffic data;
deploying the loaded vehicles to the second location along the first optimal navigable route, the deploying initiated by a transmission of the first optimal navigable route to each of the number of loaded vehicles from the fleet processor;
un-boarding the evacuees from the loaded vehicle at the second location to yield a number of un-boarded vehicles;
selecting an optimal first zone from the number of first zones based upon a number of priority factors, a set of evacuation-status data, and at least one of a set of map data, a set of environment data, or a set of traffic data;
populating a second number of navigable routes between the second location and a third location within the optimal first zone, the navigable routes being traversable by the number of un-boarded vehicles;
selecting a second optimal navigable route from the second number of navigable routes based upon the number of priority factors, the set of evacuation-status data, and at least one of a set of map data, a set of environment data, or a set of traffic data; and
re-deploying a number of designated un-boarded vehicles to the third location along the second optimal navigable route, the re-deploying initiated by a transmission of the second optimal navigable route to each of the number of un-boarded vehicles from the fleet processor.

14. The method of claim 13, further comprising before the step of deploying a number of autonomous vehicles to the to the first location a step of certifying the suitable operability of each of the fleet vehicles, wherein only vehicles certified as sufficiently functional are included within the number of the autonomous vehicles.

15. The method of claim 14, further comprising after the un-boarding step and before the re-deploying step a step of recertifying the suitable operability of each of the un-boarded vehicles, wherein only vehicles certified as sufficiently operational are included within the number of designated un-boarded vehicles.

16. The method of claim 13, wherein each of the number of first zones comprise a number of hazardous zones or a number of intermediary zones en route to a designated safety zone, and each of the number of second zones comprises a designated safety zone or an intermediary zone en route to a designated safety zone.

17. The method of claim 13, wherein between the un-boarding step and the re-deploying step further comprises a step of loading evacuation supplies or emergency personnel onto one or more of the un-boarded vehicles.

18. A non-transitory computer-readable medium storing instructions for coordinating a fleet of vehicles having an autonomous function during a process for utilizing the fleet to evacuate a population of evacuees away from a hazardous zone toward a designated safety zone that, when executed by a processor, cause the processor to perform the steps of:
retrieving map data defining travel routes with respect to a geographic region of operation, evacuation-status data defining the whereabouts of each of the vehicles and each of the evacuees with respect to the map data, environment data defining the boundaries of each of the hazardous zones and the designated safety zones with respect to the map data, and traffic data defining the traffic conditions of each of the travel routes with respect to the map data;
directing the fleet of vehicles to board evacuees at a first boarding location defined by the map data and to report a boarding confirmation to the processor when a boarding operation is completed, the boarding location of each of the vehicles corresponding to an optimally-determined boarding location according to a set of priority factors in view of the map data, evacuation-status data, environment data, and traffic data;
in response to receiving a boarding confirmation from a reporting boarded vehicle at a current boarding location, directing the boarded vehicle to travel along a first optimal navigable route to a second de-boarding location away from the hazardous zone and to report to an arrival confirmation to the processor when the boarded vehicle has arrived, the optimal navigable route corresponding to a set of priority factors and the map data, evacuation-status data, environment data, and traffic data;
in response to receiving an arrival confirmation from the boarded vehicle at the second de-boarding location, directing the boarded vehicle to de-board and report a de-boarding confirmation when the de-boarding operation is completed; and
in response to receiving a de-boarding confirmation from a reporting de-boarded vehicle, directing the de-boarded vehicle to travel along a second optimal navigable route to a third location, the second optimal navigable route corresponding to a set of priority factors and the map data, evacuation-status data, environment data, and traffic data.

19. The non-transitory computer readable medium of claim 18, wherein the instructions for directing the de-boarded vehicle to a third location include further instructions comprising one of: directing the de-boarded vehicle to a third location comprising a third boarding location, directing the de-boarded vehicle to return to the first boarding location, or directing the de-boarded vehicle to a non-boarding location within a designated safety zone.

20. The non-transitory computer readable medium of claim 18, wherein the instructions for directing the boarded vehicle to a second location further comprise defining the second de-boarding location as an intermediary location or a final safety location.
